# EUROPEAN PATENT APPLICATION

(11) **EP 0 821 328 A2**
(43) Date of publication of application: **28.01.1998**
(21) Application number: 97112354.2
(22) Date of filing: 18.07.1997
(51) Int. Cl.: G08B 5/22

(54) **Apparatus and method of a selective calling receiver for displaying messages classified by time of receipt**

(30) Priority: 22.07.1996 JP 192096/96
(71) Applicant: NEC CORPORATION, Tokyo (JP)
(72) Inventor: Kuramatsu, Hiroyasu, c/o NEC Shizuoka, Ltd., Kakegawa-shi, Shizuoka (JP)
(74) Representative: VOSSIUS & PARTNER

(57) **Abstract**

An apparatus and a method of a selective calling receiver that stores a plurality of received messages and receipt times of the received messages. the receiver also stores a plurality of time blocks indicating a predetermined time period, and maintains a current time. The receiver selects messages whose receipt times are included in one of the plurality of time blocks whose predetermined time range includes the current time, and displays selected messages by the selecting circuit.

## Description

The present invention relates to an apparatus and a method of a selective calling receiver, and more particularly, to an apparatus and a method of a selective calling receiver for displaying a time-classified message.

A conventional selective calling receiver (also known as "pager", and hereinafter referred to as "receiver") receives a radio signal transmitted from a base station, and detects a selective calling number from the radio signal. When the detected number is that of the receiver, the receiver detects the message accompanying the selective calling number. The receiver notifies the user that a call has been received, and displays the detected message.

As an Example, Japanese Patent Application laid-Open No. S60-191531 discloses a receiver that detects two kinds of own selective calling numbers. The receiver detects two types of messages accompanying the two kinds of numbers. Received messages are classified by calling number.

A user of this receiver may desire to display only one type of message, such as business-related messages. This receiver, though not described as being designed for such uses may be used in such a fashion since the memory areas are separate, and the user may designate which message area stores each type of message.

However, in such a receiver, since two separate selective calling numbers are needed, the user has to register each number to a service operator. The service charge of the operator is usually proportional to the number of registered selective numbers. Thus, the service charge increases.

An object of the present invention is to provide an apparatus and a method of a receiver that displays a user's desired message without adding calling numbers.

Another object of the present invention is to provide an apparatus and a method of a receiver that displays messages classified by time of receipt.

In order to achieve the above-identified objects, a receiver of the present invention may store a plurality of received messages and their receipt times. The receiver also stores at least two time blocks, one of which may designate a business time period, and another which may designate a personal time period. When message display is requested by the user, the receiver first determines which time block the current time falls into. Based upon this, those stored messages which fall into the current time block are displayed first. For example, messages received during business hours are displayed first when the user retrieves messages during business hours.

As described above, since the present invention displays each message according to the priority corresponding to the current time, the receiver can display each message by roughly classifying it into, for example, either a business message or a personal message.

These and other objects, features and advantages of the present invention will become more fully apparent from the following detailed description taken in conjunction with the accompanying drawings, in which;
Fig. 1 is a block diagram of a selective calling receiver according to an embodiment of the present invention;
Fig. 2 is a table illustrating the message memory shown in Fig. 1;
Fig. 3 is a table illustrating time block memory shown in Fig. 1;
Fig. 4 is a flowchart showing the steps followed by the receiver shown in Fig. 1;
Fig. 5 is a table illustrating display order according to stored message in message memory shown in Fig. 2;
Fig. 6 is a perspective view of the receiver shown in Fig. 1;
Figs. 7(a)-7(h) illustrate the display while setting a time block in an embodiment of the present invention;
Fig. 8 is a table illustrating second embodiment of a message memory shown in Fig. 1; and
Fig. 9 is a table illustrating a third embodiment of a time block memory shown in Fig. 1

The selective calling receiver (also known as "Pager" and hereinafter referred to as "receiver") of the present invention stores each received message in a message memory together with its receipt time, and displays each message according to its time block . In this embodiment, a user may designate two time blocks, one for the business time period, the other for the personal time period. The receiver first displays messages belonging to the time block including the current time. Usually, the user viewing messages during business hours first desires to see messages received during business hours. This is possible if one of the time blocks is set to the business hours.

The embodiments of the invention are described with reference to the drawings.

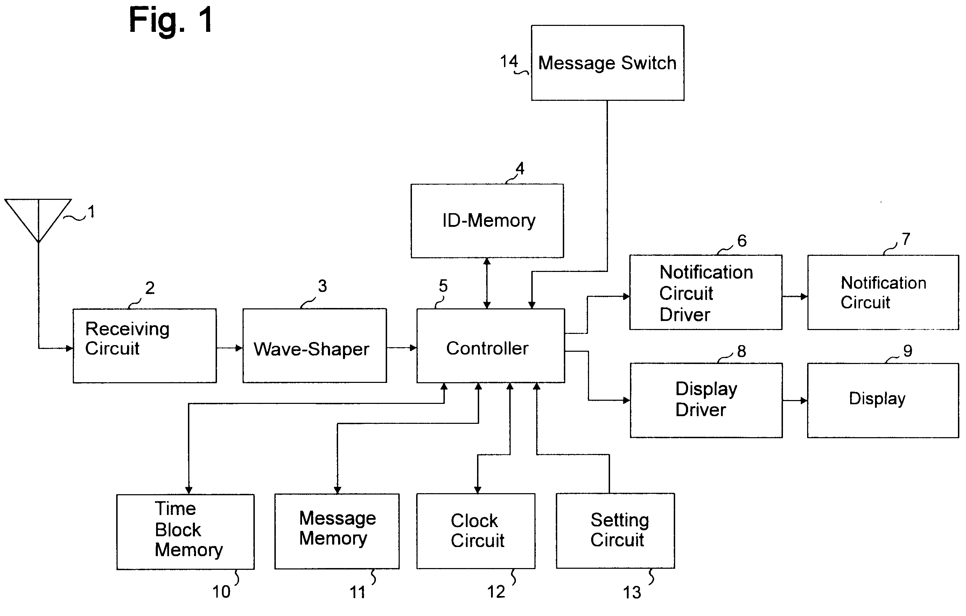

In Fig. 1, an antenna 1 receives a radio signal from a base station (not shown), and supplies the received signal to a receiving circuit 2. The receiving circuit 2 amplifies the received signal and demodulates it, and outputs a demodulated signal to a wave-shaper 3. The wave-shaper 3 wave-shapes the demodulated signal to a digital signal and supplies the digital signal to a controller 5.

An ID-memory 4 stores the receiver's own selective calling numbers, which it supplies to the controller 5. A clock circuit 12 maintains the current time and date, which it supplies to the controller 5. A message memory 11 stores messages supplied by the controller 5.

The controller 5 decodes the selective calling number from the digital signal, and compares the detected number to the receiver's own number stored in ID-memory 4. If they match, the controller 5 detects a message accompanying the detected number, and outputs a coincidence signal to a notification circuit driver 6. The controller 5 also outputs the detected message to a display driver 13. The controller 5 attaches a date and time to the detected message, and stores it in message memory 11. The controller 5 controls functions relating to display of a message (described in detail later).

The notification circuit driver 6 drives a notification circuit 7 when the coincidence signal is supplied from the controller 5. The notification circuit 7 notifies the user that a call has been received.

The display driver 8 drives a display 9 when the message is supplied from the controller 5. The display 8 shows the message, with its receipt time and date.

A message switch 14 is operated by the user to request the controller 5 to display stored messages. A time block memory 10 stores block numbers and time blocks (described in detail later). A setting circuit 13 is operated by the user to set the time block (described in detail later).

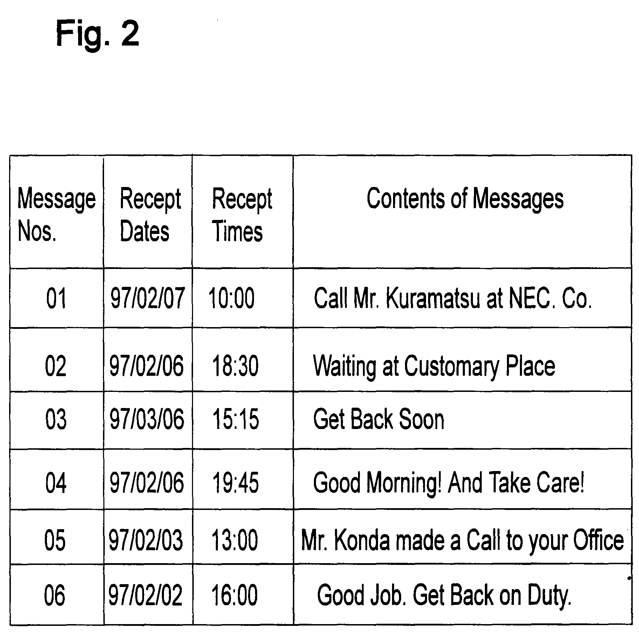

In Fig. 2, the message memory 11 is shown storing received messages numbers 01-06, together with their receipt times and dates. A newly received message is stored as message number 01, while incrementing the message numbers of all previously stored messages. Therefore, the messages are stored in order of receipt.

The stored message are separated into two types, the first type being messages received during business hours, such as "CALL MR. KURAMATSU AT NEC CO." and the second being messages received during personal hours such as "WAITING AT CUSTOMARY PLACE". The message memory 11 stores the two types of messages together.

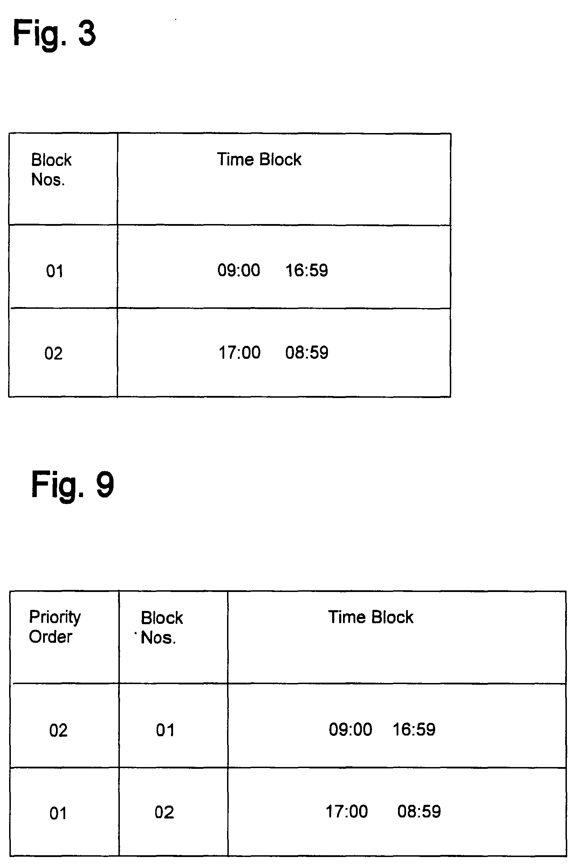

In Fig. 3, the time block memory 10 defines a block number 01 corresponding to a period of time used for business and time block number 02 used for personal matters. In addition, the starting and end times of each blocks are set by the time block. In Fig. 3, these times are, respectively, 09:00 and 16:59 for block number 01 and at 17:00 and 08:59 for block number 02.

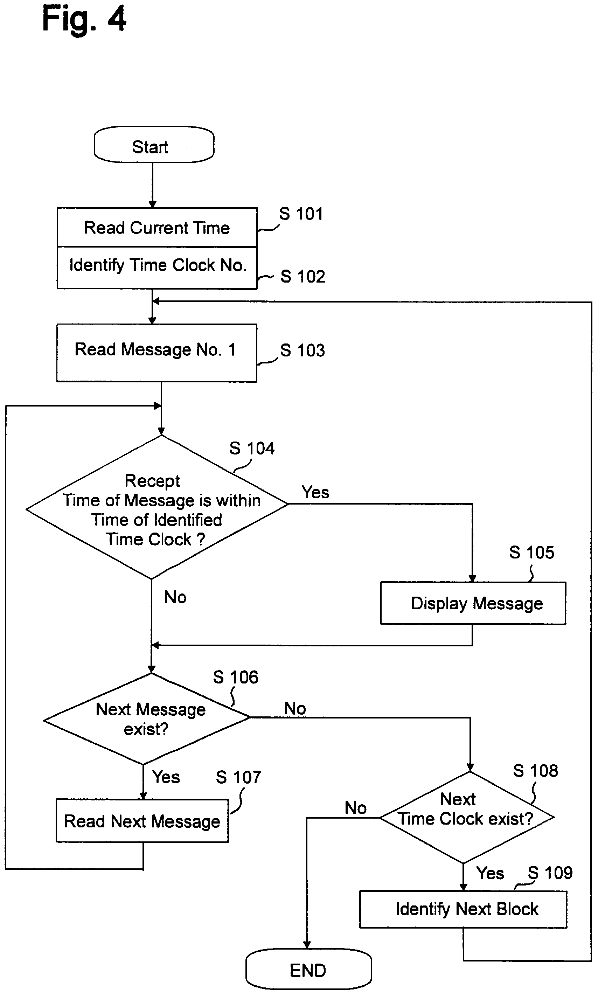

In Fig. 4, if the message switch 4 is operated to request the stored messages (START), the controller 5 reads a current time (STEP S101), and determines which time block includes the current time (STEP S102). As an example, if the current time is 21:00 on February 2, 1997, the current time is included in the block number 02.

The controller 5 then loads a message number 01 from the message memory 11 (STEP S103). It then compares the reception time of this message, 10:00 to the time period identified by block number 02 (STEP S104). In this case, since the reception time of the message is 10:00, it is not within the time period, 17:00 to 08:59, corresponding to the time block number 02. Thus, it does not display the message 01 on the display 4.

The controller 5 then determines whether a next message exists (STEP S106), and if so, reads the next message from message memory 11 (STEP S107). The controller 5 compares the reception time of message number 02 to the time period of the identified block No. 02 (STEP S104). In this case, since the reception time of this message, 18:30, is within the time period of block No. 02, the message "WAITING AT CUSTOMARY PLACE" is displayed on the display 9 (STEP S105).

The controller 5 repeats the above-mentioned operation until all messages in the message memory have been read, and, in this case, displaying messages 02 and 04. Next, the controller 5 determines whether another time block exists (STEP S108). In this case, the block number 01 exists, which the controller 5 identifies as the next block (STEP S109). The controller 5 again loads message No.01 (STEP S103). Since the reception time of this message is within block number 01 (step s104), the controller 5 displays the message "CALL MR. KURAMATSU at NEC CO." on display 9 (step s105).

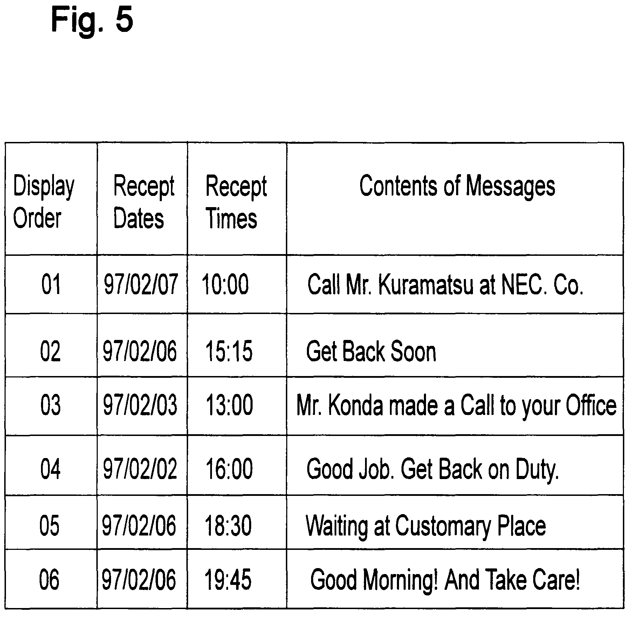

By repeating the above operations, the messages in the message memory shown in Fig. 2 are read in the order shown in Fig. 5, which represents messages 01, 02, 03, 05, and 06 from Fig. 2.

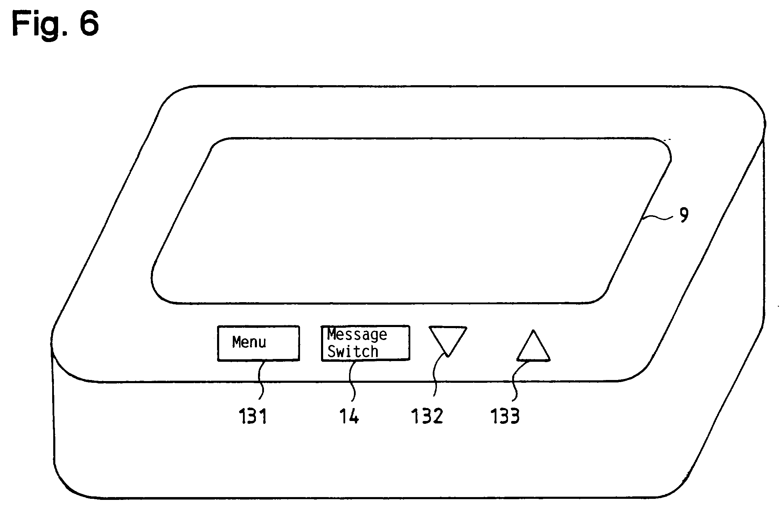

In Fig. 6, the setting circuit 13 has a MENU key 131, a DOWN key 132 and a UP key 133.

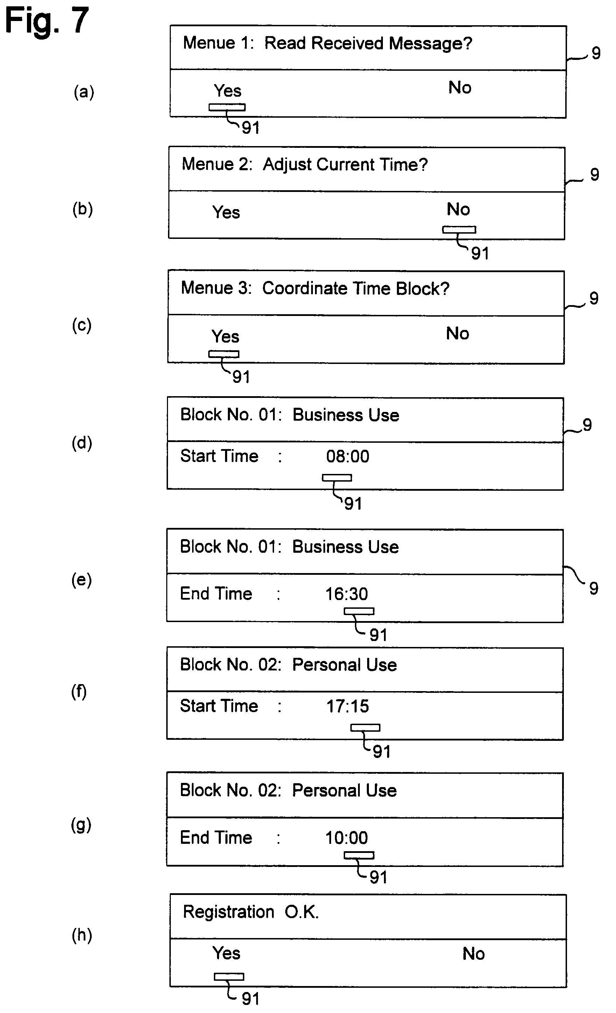

In Figs 7, when the user desires to set a time block, the MENU key 131 is pushed, and the display 9 shows MENU 1 shown in Fig. 7(a). MENU 1 is an operational mode to determine whether the user desires to read stored messages. As this is not the case, the user pushes the MENU key 131 once again. The display 9 shows MENU 2 shown in Fig. 7(b). MENU 2 is an operational mode to adjust the current time, so the user pushes the MENU key 131 again. The display 9 now shows MENU 3 shown in Fig. 7(c), which is used to set time blocks. Since this is what the user desires, he/she operates the DOWN key 132 and/or the UP key 133 such that an under-score 91 is positioned on "YES". After selecting "YES", the display 9 shows a start time of the block number 01 to be used for business use shown in Fig. 7(d). The user operates the DOWN and/or UP key 132 and 133 for setting the hour, and after setting that, he/she push the MENU key 131 for setting the minutes. The user once more pushes the MENU key, causing the display 9 to show an end time of block number 01 shown in Fig. 7(e). The user operates the MENU KEY 131 and the DOWN/UP keys 132/133 for setting the hour and minute. The user once more pushes the MENU key 131, causing display 9 to show a start time of block number 02 to be used to personal use shown in Fig. 7(f). The user operates the MENU key 131 and DOWN/UP keys 132/133 for setting the hour and minute. After that the user pushes the MENU key 131 to set an end time of block number 02 shown in Fig. 7(g), which the user also sets. Finally, display 9 shows a display of Fig. 7(h) to confirm whether the set time should be stored, which, if desired, is done by selecting "YES".

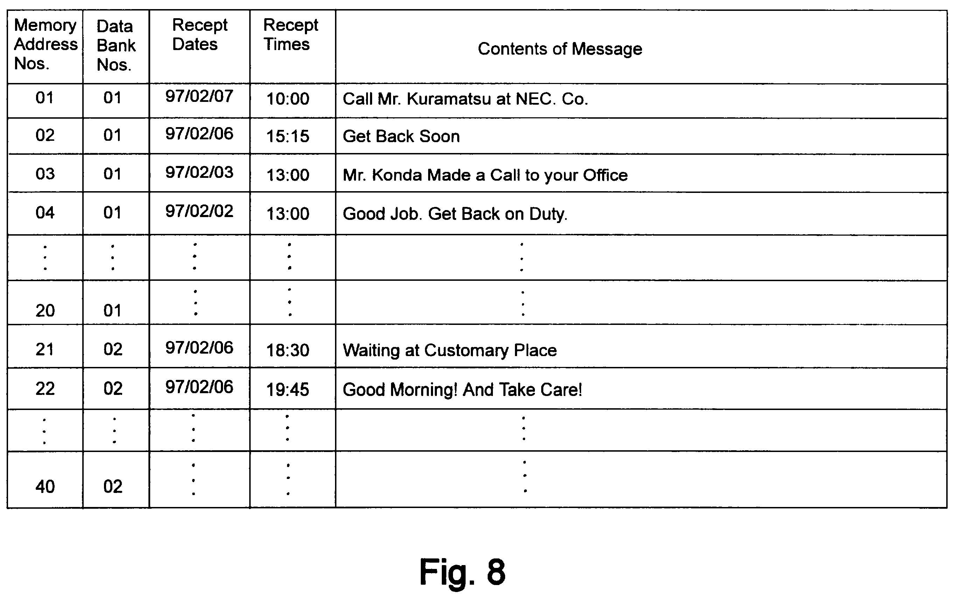

In Fig. 8, the second embodiment provides that message banks of the message memory 11 are linked with the time blocks. When a message is received, the reception time is compared to the time block information to store the message in the corresponding message bank. In this figure, messages whose reception time is included in the time period of the block number 01 are stored in the message address range 01-20, whereas the messages whose reception time is included in the time period of block number 02 are stored in the message address range 21-40. In this embodiment, message reading time is reduced.

In Fig. 9, the third embodiment allows the user to decide a priory time block. The controller 5 displays the messages whose receipt times are included in the priority time block first. Thus, stored messages belonging to the priority time block are displayed first, even if the priority time block does not include the current time. In this figure, as an example, the current time is 10:00, but the controller 5 first displays messages belonging to priority time block 02, which does not include the current time.

In a further embodiment of the present invention the setting circuit 13 consists of a personal computer, and the receiver can connect with the personal computer as an example of an external apparatus allowing time blocks to be set.

As described above, since this invention displays each message according to the priority corresponding to the current time or the priority decided by the user, the receiver can display each message by roughly classifying it into a message type, for example, either business or personal.

Obviously, numerous additional modifications variations of the present invention are possible in light of the above teachings. It is, therefore, to be understood that within the scope of the appended claims, the present invention may be practiced other than as specifically described herein.

## Claims

1. A selective calling receiver comprising:
a message memory for storing at least one received message;
a classifying circuit for classifying each of said at least one message based on time of receipt of said message; said classifying being performed when a user of the receiver requests display of said at least one message; and
a screen for displaying said at least one message based on said classification.

2. The receiver claimed in claim 1, wherein said classifying circuit comprises;
a time block memory for storing data defining time periods of a plurality of time blocks;
a clock circuit for determining a current time;
a selection circuit for selecting one of the time blocks whose said time period includes said current time; and
a controller for controlling said screen such that said screen displays said at least one message by first displaying each of said at least one message whose receipt time is within said selected time block.

3. A selective calling receiver comprising:
a message memory for storing at least one received message, said message memory being divided into a plurality of message banks;
a time block memory for storing data defining time periods of a plurality of time blocks, each of said time blocks being associated with one of said message banks;
a clock circuit capable of determining a current time;
a classifying circuit for classifying each said received message based upon said time period during which said message was received, and storing said message in said storage bank associated with said time period; and
a screen for displaying any of said at least one message which are stored in said message bank associated with said current time.

4. A selective calling receiver comprising:
a message memory for storing at least one received message and a receipt times of each said received message;
a time block memory for storing data defining time periods of a plurality of time blocks, said plurality of time blocks having an predetermined priority order;
a clock circuit for determining a current time;
a selection circuit for selecting messages based on said priority of said time blocks during which said messages were received; and
a screen for displaying messages based on said selection.

5. A selective calling receiver displaying received messages when requested by a user, the receiver comprising :
a message memory for storing at least one received message and a receipt times of each of said received message;
a time block memory for storing data defining time periods of a plurality of time blocks;
a clock circuit for determining a current time;
a selecting circuit for selecting any of said messages whose receipt times fall within one of said plurality of time periods which also includes said current time; and
a screen for displaying said selected messages.

6. The receiver claimed in any of claims 1 to 5, further comprising a setting circuit, operable by the user, for setting a start time and an end time of each of said time periods.

7. The receiver claimed in claim 6, wherein said setting circuit comprises a plurality of buttons.

8. The receiver claimed in claim 6, wherein said setting circuit comprises an external apparatus.

9. The receiver claimed in any of claims 1 to 8, wherein said time block memory stores at least a first time block representing business hours and a second time block representing non-business hours.

10. A method of displaying messages received by a selective calling receiver, the method comprising steps of:
storing a plurality of received messages and receipt times of said plurality of messages;
detecting a request to display said stored messages;
predetermined time period which includes a current time from a plurality of predetermined time periods defined by data stored in the receiver;
selecting messages whose receipt times are included in said selected time period; and
displaying selected messages.

11. The method claimed in claim 10, further comprising a step prior to said storing step of setting a start time and an end time of each of said time periods.

12. The method claimed in claim 10 or 11, wherein said step of setting comprises steps of;
selecting a time period setting mode from a plurality of modes;
choosing one of said time periods;
deciding a start time of chosen time period;
deciding an end time of chosen time period;
and
choosing another time period;
repeating said steps of deciding a start time, deciding an end time, and choosing another time period until said start and end times of all of said time period are decided.
